(19)

Europäisches Patentamt
European Patent Office
Office européen des brevets

(11) **EP 4 417 420 A1**

(12) **EUROPEAN PATENT APPLICATION**
published in accordance with Art. 153(4) EPC

(43) Date of publication:
**21.08.2024 Bulletin 2024/34**

(21) Application number: **22880651.9**

(22) Date of filing: **29.08.2022**

(51) International Patent Classification (IPC):
**B32B 27/36** (2006.01)      **A01G 9/14** (2006.01)
**A01G 13/02** (2006.01)

(52) Cooperative Patent Classification (CPC):
**A01G 9/14; A01G 13/02; B32B 27/36;** Y02A 40/25

(86) International application number:
**PCT/JP2022/032348**

(87) International publication number:
**WO 2023/062955 (20.04.2023 Gazette 2023/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.10.2021 JP 2021166833**

(71) Applicant: **Toyobo Co., Ltd.**
**Kita-ku**
**Osaka-shi, Osaka 530-0001 (JP)**

(72) Inventors:
• **SHIMIZU,Tomoko**
**Otsu-shi, Shiga 520-0292 (JP)**
• **OKUMURA,Hisao**
**Tokyo 104-8345 (JP)**

(74) Representative: **Vossius & Partner**
**Patentanwälte Rechtsanwälte mbB**
**Siebertstrasse 3**
**81675 München (DE)**

(54) **LAYERED FILM, FILM FOR PROTECTED HORTICULTURE, AND KNITTED FABRIC**

(57)     An object is to provide a laminated film, a film for protected horticulture, a woven or knitted fabric, and the like that suppress deterioration in appearance and yellowing of a film due to ultraviolet rays and maintain high light transmittance. A laminated film having a heat-ray reflection layer and a weather-resistant layer on at least one surface of the heat-ray reflection layer, in which the heat-ray reflection layer has a multilayer laminated structure in which 20 or more layers of a first layer mainly composed of a resin and a second layer mainly composed of a resin are alternately laminated in a thickness direction, the first layer contains polyethylene naphthalate, a protective layer is provided on at least one surface of the multilayer laminated structure, the protective layer has a thickness of 10 $\mu$m or less, the protective layer is a layer mainly composed of the resin of the first layer, the weather-resistant layer is composed of a resin composition containing an ultraviolet absorber having a triazine skeleton, and a content of the ultraviolet absorber in the weather-resistant layer is 8 to 45 mass%, the weather-resistant layer has a thickness of 3 to 15 um, and a secondary reflection band of the laminated film is 400 to 700 nm, and a spectral transmittance in the secondary reflection band is 60% or more.

**Description**

TECHNICAL FIELD

The present invention relates to a laminated film capable of suppressing deterioration in appearance and yellowing of a film due to ultraviolet rays and maintaining high light transmittance particularly without blocking the growth of plants, and a film for protected horticulture, a woven or knitted fabric, and the like obtained by using the laminated film.

BACKGROUND ART

In cultivating plants utilizing an agricultural house or the like, it is widely practiced to create an environment optimal for growing plants by controlling an enclosed space, because the yield amount of plants can be increased and the quality of plants can be improved.

When such a film for outdoor use is assumed, deterioration in appearance and mechanical properties due to change with time unfortunately occurs. As a countermeasure, for example, a film obtained by kneading an ultraviolet absorber into a film composition resin is used (see, for example, Patent Document 1). Even when such kneading into a resin is performed, the outermost layer is highly exposed to ultraviolet rays, so that the extreme surface layer portion is frequently roughened and deteriorated by ultraviolet rays. Accordingly, there is still a problem in durability.

For example, a laminated light-resistant polyester film including a laminated light-resistant layer containing an ultraviolet absorber on a surface of a polyethylene naphthalate (PEN) resin layer has been proposed (see, for example, Patent Document 2). However, the film is a PEN single laminated body that is not satisfactory in terms of, for example, initial optical characteristics and long-term durability. In addition, proposals have been made considering an ultraviolet absorber in an ultra-multilayer film (see, for example, Patent Document 3). However, the film is still not satisfactory in terms of long-term durability and the like.

On the other hand, for plant growth, it is important to enhance photosynthesis efficiency. Maximum absorption wavelengths of chlorophyll pigments involved in photosynthesis are around 450 nm and 660 nm, so that for an agricultural film, long-term durability for maintaining permeability in this wavelength range during long-term use is required.

PRIOR ART DOCUMENT

PATENT DOCUMENTS

Patent Document 1: JP-B-4200797
Patent Document 2: JP-B-5384980
Patent Document 3: JP-B-6780636

SUMMARY OF THE INVENTION

PROBLEMS TO BE SOLVED BY THE INVENTION

An object of the present invention is to provide a laminated film, a film for protected horticulture, a woven or knitted fabric, and the like that suppress deterioration in appearance and yellowing of a film due to ultraviolet rays and maintain high light transmittance.

MEANS FOR SOLVING THE PROBLEMS

The present inventors have found that the above problems can be solved by using a laminated film having a specific laminated structure of resin layers and the like, and thus have completed the present invention.
That is, the present invention provides the following laminated film.
[1] A laminated film having a heat-ray reflection layer and a weather-resistant layer on at least one surface of the heat-ray reflection layer, wherein

the heat-ray reflection layer has a multilayer laminated structure in which 20 or more layers of a first layer mainly composed of a resin and a second layer mainly composed of a resin are alternately laminated in a thickness direction,

the first layer contains polyethylene naphthalate,

a protective layer is provided on at least one surface of the multilayer laminated structure,

the protective layer has a thickness of 10 $\mu$m or less,

the protective layer is a layer mainly composed of the resin of the first layer,

the weather-resistant layer is composed of a resin composition containing an ultraviolet absorber having a triazine skeleton, and a content of the ultraviolet absorber in the weather-resistant layer is 8 to 45 mass%,

the weather-resistant layer has a thickness of 3 to 15 $\mu$m, and

a secondary reflection band of the laminated film is 400 to 700 nm, and a spectral transmittance in the secondary reflection band is 60% or more.

[2] The laminated film according to [1], wherein the protective layer is a layer mainly composed of polyethylene naphthalate.

[3] The laminated film according to [1] or [2], wherein the weather-resistant layer has a binder component.

[4] The laminated film according to [3], wherein the binder component contains an acrylic resin.

[5] The laminated film according to any one of [1] to [4], wherein a refractive index of the first layer and a refractive index of the second layer in the heat-ray reflection layer are different from each other.

[6] The laminated film according to any one of [1] to [5], containing the protective layer on both surfaces of the multilayer laminated structure.

[7] The laminated film according to any one of [1] to [6], containing the weather-resistant layer on both surfaces of the heat-ray reflection layer.

[8] The laminated film according to any one of [1] to [7], wherein the laminated film has an initial spectral transmittance of 80% or more at 450 nm and 85% or more at 660 nm, and a spectral transmittance after a weather resistance test (metal halide lamp type weather resistance tester, ultraviolet irradiance: 900 W/m$^2$, treated for 320 hours under environment at temperature of 63°C) of 75% or more at 450 nm and 80% or more at 660 nm.

In addition, the present invention provides the following film for protected horticulture.

[9] A film for protected horticulture containing the laminated film according to any one of [1] to [8].

In addition, the present invention provides the following woven or knitted fabric.

[10] A woven or knitted fabric containing a thin belt-shaped tape cut from the laminated film according to any one of [1] to [8].

EFFECT OF THE INVENTION

The laminated film of the present invention having the above structure is a film that suppresses deterioration in appearance and yellowing of a film due to ultraviolet rays and maintains high light transmittance.

In addition, the film for protected horticulture, the woven or knitted fabric, and the like of the present invention is obtained by using the laminated film, so that, for example, in an agricultural house or the like built with them, it is possible to easily promote plant growth over a long period of time and to provide high durability.

BRIEF DESCRIPTION OF THE DRAWINGS

Fig. 1 is a schematic cross-sectional view showing an embodiment of the laminated film of the present invention.

Fig. 2 is a partial front view showing an embodiment of the laminated film of the present invention.

Fig. 3 is a partial front view showing another embodiment of the laminated film of the present invention.

MODE FOR CARRYING OUT THE INVENTION

Hereinafter, a detailed description is made of embodiments of the present invention, but the present invention is not limited to these embodiments.

In the present description, a numerical range represented by "to" means a range including numerical values described before and after "to" as a lower limit value and an upper limit value.

<Laminated film>

The laminated film of the present invention is

a laminated film having a heat-ray reflection layer and a weather-resistant layer on at least one surface of the heat-ray reflection layer, in which

the heat-ray reflection layer has a multilayer laminated structure in which 20 or more layers of a first layer mainly composed of a resin and a second layer mainly composed of a resin are alternately laminated in a thickness direction,

the first layer contains polyethylene naphthalate,

a protective layer is provided on at least one surface of the multilayer laminated structure,

the protective layer has a thickness of 10 μm or less,

the protective layer is a layer mainly composed of the resin of the first layer,

the weather-resistant layer is composed of a resin composition containing an ultraviolet absorber having a triazine skeleton, and a content of the ultraviolet absorber in the weather-resistant layer is 8 to 45 mass%,

the weather-resistant layer has a thickness of 3 to 15 μm, and

a secondary reflection band of the laminated film is 400 to 700 nm, and a spectral transmittance in the secondary reflection band is 60% or more.

In the present invention, visible light refers to light having a wavelength of 400 to 800 nm, and heat rays refer to light having a wavelength of 800 to 1400 nm.

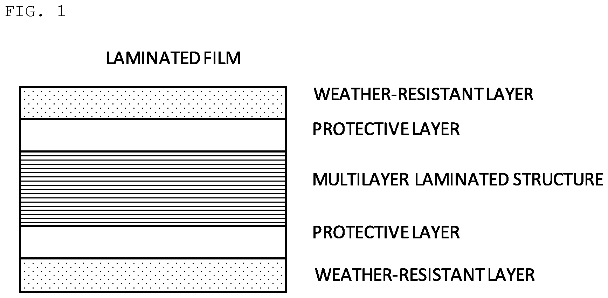

The laminated film may be, for example, a laminated structure as shown in Fig. 1. Fig. 1 is a schematic cross-sectional view showing an embodiment of the laminated film, an example in which the protective layer is provided on both surfaces of the multilayer laminated structure, and the weather-resistant layer is provided on both surfaces of the heat-ray reflection layer.

[Heat-ray reflection layer]

The heat-ray reflection layer of the present invention is a multilayer laminated structure in which 20 or more layers of a first layer mainly composed of a resin and a second layer mainly composed of a resin are alternately laminated in a thickness direction,

the first layer contains polyethylene naphthalate,

a protective layer is provided on at least one surface of the multilayer laminated structure,

the protective layer has a thickness of 10 μm or less, and

the protective layer is a layer mainly composed of a resin of the first layer.

In the present invention, "mainly composed of a resin" means that the resin is contained in an amount of 50 mass% or more with respect to the total amount of the components in the layer, and for example, the amount may be 80 mass% or more or 90 mass% or more.

The thickness of the heat-ray reflection layer is adjusted depending on the application, and may be, for example, in the range of 20 μm to 150 μm, 22 μm to 100 μm, 25 μm to 80 μm, or 30 um to 60 um. When the thickness is thin, there is an advantage that the weight is light and workability is improved.

(Multilayer laminated structure)

The multilayer laminated structure is a laminated structure in which 20 or more layers of a first layer mainly composed of a resin and a second layer mainly composed a resin are alternately laminated in the thickness direction.

In the multilayer laminated structure, the first layer can be laminated so as to be the outermost layer of the multilayer laminated structure.

The multilayer laminated structure is not particularly limited as long as it satisfies the above structure and has a function of transmitting visible light in sunlight and selectively reflecting heat rays. In addition, the first layer and the second layer preferably have different refractive indices. Regarding the reflection by alternately laminated resin layers having different refractive indices, the reflection wavelength can be designed according to the optical thickness (refractive index × physical thickness) of the resin layer, and the reflectance can be designed according to the total number of resin layers and the difference in refractive index between the resin layers. In other words, the resin can be selected and the thickness and the number of laminated resin layers can be adjusted such that desired reflection characteristics are provided.

In order to appropriately perform transmission of visible light and selective reflection of heat rays by the multilayer laminated structure, the difference in average refractive index in the in-plane direction between the two types of resin layers is preferably at least 0.03. In addition, the multilayer laminated structure may include at least 20 or more resin layers having an optical thickness of 100 to 400 nm, preferably 150 to 360 nm, and may include, for example, 30 or more layers, 40 or more layers, 60 or more layers, 80 or more layers, 100 or more layers, 150 or more layers, or 200 or more layers. In addition, it is preferable that the number of resin layers be larger from the viewpoint of an optical function, but when the number is too large, the total thickness tends to be too large. Accordingly, the number of resin layers is preferably 2000 layers or less, more preferably 1000 layers or less.

The thickness of the multilayer laminated structure is adjusted depending on the application, and may be, for example, in the range of 18 μm to 148 μm, 20 μm to 140 μm, 22 um to 100 μm, 25 μm to 80 μm, or 30 um to 60 μm.

At least polyethylene naphthalate is used as the resin for forming the resin layer in the multilayer laminated structure.

(First layer)

The first layer is mainly composed of a resin, but contains polyethylene naphthalate.

As the polyethylene naphthalate, those known per se can be appropriately used. As the polyethylene naphthalate, for example, polyethylene-2,6-naphthalenedicarboxylate is preferable. In particular, polyethylene-2,6-naphthalenedicarboxylate having a condensed aromatic ring is preferable because the layer has a high refractive index and can be stretched at a high stretching ratio.

The proportion of the ethylene naphthalene dicarboxylate component which is a monomer component in the polyethylene naphthalate is preferably 95 mol% to 100 mol%, more preferably 96 mol% or more, still more preferably 97 mol% or more, based on the total repeating units composing the polyethylene naphthalate. When the ratio of the ethylene naphthalene dicarboxylate component as a main component is less than the lower limit, the melting point of the polyethylene naphthalate composing the first layer decreases, making it difficult to provide a difference in melting point from the polyethylene terephthalate composing the second layer described later. As a result, it may be difficult to impart a sufficient difference in refractive index to the biaxially stretched laminated polyester film.

Examples of copolymer components other than the main component composing the polyethylene naphthalate may include acid components such as aromatic carboxylic acids such as isophthalic acid, terephthalic acid, orthophthalic acid, naphthalenedicarboxylic acids other than the main naphthalenedicarboxylic acid, and biphenyldicarboxylic acid; aliphatic dicarboxylic acids such as succinic acid, adipic acid, azelaic acid, sebacic acid, and decanedicarboxylic acid; and alicyclic dicarboxylic acids such as cyclohexanedicarboxylic acid, and glycol components such as aliphatic diols such as diethylene glycol, propylene glycol, 1,4-butanediol, 1,5-pentanediol, 1,6-hexanediol, and neopentyl glycol; alicyclic diols such as 1,4-cyclohexanedimethanol, polyethylene glycol, and polytetramethylene glycol, and the like.

Among the copolymer components, at least one selected from the group consisting of isophthalic acid, terephthalic acid, neopentyl glycol, 1,4-cyclohexanedimethanol, and diethylene glycol is preferable. Among these copolymer components, isophthalic acid and terephthalic acid are particularly preferable. These copolymer components may be used alone, or two or more thereof may be used.

The polyethylene naphthalate can be produced by appropriately applying a known method. For example, the polyethylene naphthalate can be produced by a method in which a diol component, a dicarboxylic acid component as main components, and optionally a copolymer component are subjected to an esterification reaction, and then the obtained reaction product is subjected to a polycondensation reaction to form a polyester. Alternatively, the polyethylene naphthalate may be produced by a method in which derivatives of these raw material monomers are subjected to a transesterification reaction, and then the obtained reaction product is subjected to a polycondensation reaction to form a polyester. Furthermore, a method may be employed in which two or more kinds of polyesters are melt-kneaded in an extruder and then subjected to a transesterification reaction (redistribution reaction).

The intrinsic viscosity of the polyethylene naphthalate composing the first layer is preferably 0.40 to 0.80 dl/g, and may be, for example, in the range of 0.45 to 0.75 dl/g. When the intrinsic viscosity of the polyethylene naphthalate composing the first layer is not within the above range, the difference from the intrinsic viscosity of the polyethylene terephthalate composing the second layer may become larger. As a result, in the case of an alternately laminated structure, the layer structure may be disturbed, or the film formability may be deteriorated although a film can be formed. Two or more kinds of polyesters may be melt-mixed in an extruder and then subjected to transesterification, as long as the intrinsic viscosity of each polyester is within the above range.

The glass transition temperature of the polyethylene naphthalate composing the first layer is preferably higher than the glass transition temperature of the polyethylene terephthalate composing the second layer.

The first layer may contain a small amount of additives as long as the object of the present invention is not impaired, and examples of the additives include additives such as lubricants such as inert particles, coloring agents such as pigments and dyes, stabilizers, flame retardants, and foaming agents.

(Second layer)

The second layer is mainly composed of a resin.

When a resin having a lower refractive index than the resin in the resin layer of the first layer is used, the second layer can exhibit a sufficient refractive index difference from a resin layer having a higher refractive index, and the resin is not particularly limited as long as necessary adhesion can be maintained. For example, a resin obtained by copolymerizing a copolymer component capable of reducing the refractive index with the resin of the first layer used for the resin layer having a high refractive index can also be used. In addition, since it is not necessary to increase the refractive index by stretching or the like, a resin having a melting point sufficiently lower than that of an amorphous resin or a resin having a high refractive index can also be used. In addition to the first layer, amorphous polyester can be used as the polyester resin from the viewpoint of optical characteristics. As the amorphous polyester, for example, cyclohexanedimethanol copolymerized polyethylene terephthalate is preferable. Polylactic acid, an acrylic resin, polycarbonate, and polystyrene can also be used as a resin for use in the resin layer having a low refractive index. These may be used alone or in combination of two or more kinds thereof.

The intrinsic viscosity of the second layer is preferably 0.4 to 1.0 dl/g, and may be, for example, in the range of 0.45 to 0.95 dl/g or 0.5 to 0.95 dl/g. When the intrinsic viscosity of the polyethylene terephthalate composing the second layer is not within the above range, the difference from the intrinsic viscosity of the polyethylene naphthalate composing the first layer may become larger. As a result, in the case of an alternately laminated structure, the layer structure may be disturbed, or the film formability may be deteriorated although a film can be formed.

For example, two or more kinds of polyesters may be melt-mixed in an extruder and then subjected to transesterification, as long as the intrinsic viscosity of each polyester is within the above range.

The second layer of the present invention may contain a small amount of additives as long as the object of the present invention is not impaired, and examples of the additives include additives such as lubricants such as inert particles, coloring agents such as pigments and dyes, stabilizers, flame retardants, and foaming agents.


(Protective layer)


The protective layer is provided on at least one surface of the multilayer laminated structure.

The protective layer is a layer mainly composed of the resin of the first layer.

With regard to the resin in the protective layer, polyethylene naphthalate, and the like, the description in the column of the first layer can be appropriately used in the same manner.

The thickness of the protective layer is 10 um or less, but may be, for example, 1 $\mu$m to 9 $\mu$m, 2 $\mu$m to 8 $\mu$m, or 4 to 7 $\mu$m.

When a plurality of protective layers are provided in the laminated film, for example, when the protective layers are provided on both surfaces of the multilayer laminated structure, the thickness of protective layer refers to the thickness of each of them.

The protective layer is preferably a layer mainly composed of polyethylene naphthalate.

In the present invention, "mainly composed of polyethylene naphthalate" means that polyethylene naphthalate is contained in an amount of 50 mass% or more with respect to the total amount of the components in the layer, and for example, the amount may be 80 mass% or more or 90 mass% or more.

The protective layer is laminated so as to be the outermost layer of the heat-ray reflection layer.

In addition, as illustrated in the schematic cross-sectional view of Fig. 1, the protective layer can be provided on both surfaces of the multilayer laminated structure.


[Weather-resistant layer]


The weather-resistant layer of the present invention is a layer provided on at least one surface of the heat-ray reflection layer.

As shown in the schematic sectional view of Fig. 1, the weather-resistant layer can be provided on both surfaces of the heat-ray reflection layer.

The weather-resistant layer is made of a resin composition containing an ultraviolet absorber having a triazine skeleton.

The resin composition contains a resin as a binder component. Specific examples of the resin may include a (meth)acrylic resin, a polyester resin, a polyolefin resin, a urethane resin, and a fluororesin. These may be used alone, or two or more thereof may be mixed for use.

The resin is a main component (that is, the content is 50 mass% or more) in the resin composition, and is preferably contained in an amount of 70 mass% or more, and may be contained in an amount of 90 mass% or more, or 95 mass% or more with respect to the entire resin composition.

The resin composition contains an ultraviolet absorber having a triazine skeleton, but may contain the resin and the ultraviolet absorber, and the resin may have an ultraviolet absorber having a triazine skeleton in the molecular structure. The triazine skeleton site may be used alone, or a mixture of two or more thereof may be contained.

A known ultraviolet absorber can be appropriately used as long as the ultraviolet absorber has a triazine skeleton in the molecule.

Examples of the ultraviolet absorber having a triazine skeleton may include 2-(2-hydroxy-4-hexyloxyphenyl)-4,6-diphenyl-s-triazine, 2-(2-hydroxy-4-propoxy-5-methylphenyl)-4,6-bis(2,4-dimethylphenyl)-s-triazine, 2-(2-hydroxy-4-hexyloxyphenyl)-4,6-dibiphenyl-s-triazine, 2,4-diphenyl-6-(2-hydroxy-4-methoxyphenyl)-s-triazine, 2,4-diphenyl-6-(2-hydroxy-4-ethoxyphenyl)-s-triazine, 2,4-diphenyl-6-(2-hydroxy-4-propoxyphenyl)-s-triazine, 2,4-diphenyl-6-(2-hydroxy-4-butoxyphenyl)-s-triazine, 2,4-bis(2-hydroxy-4-octoxyphenyl)-6-(2,4-dimethylphenyl)-s-triazine, 2,4,6-tris(2-hydroxy-4-hexyloxy-3-methylphenyl)-s-triazine, 2,4,6-tris(2-hydroxy-4-octoxyphenyl)-s-triazine, 2-(4-isooctyloxycarbonylethoxyphenyl)-4,6-diphenyl-s-triazine, 2-(4,6-diphenyl-s-triazin-2-yl)-5-(2-(2-ethylhexanoyloxy)ethoxy)phenol, and the like. These may be used alone, or two or more thereof may be mixed for use.

When the resin has an ultraviolet absorber having a triazine skeleton in the molecular structure, examples of the resin may include a resin having a triazine skeleton on the side chain or the main chain, which can function as an ultraviolet absorber. In addition, the triazine skeleton in this case may include a triazine skeleton in which a part of the structure in the ultraviolet absorber having a triazine skeleton is replaced with a single bond (corresponding to a covalent bond site with a resin).

The content of the ultraviolet absorber in the weather-resistant resin layer is preferably 8 to 45 mass%, and may be, for example, 10 to 40 mass%, 12 to 35 mass%, 15 to 30 mass%, or 20 to 25 mass%. The same applies when the resin has an ultraviolet absorber having a triazine skeleton in the molecular structure.

The weather-resistant resin layer may appropriately contain another ultraviolet absorber different from the ultraviolet absorber having a triazine skeleton.

Examples of the other ultraviolet absorber may include benzotriazole-based ultraviolet absorbers, benzophenone-based ultraviolet absorbers, benzoxazinone-based ultraviolet absorbers, salicylate-based ultraviolet absorbers, cyanoacrylate-based ultraviolet absorbers, and salucylate-based ultraviolet absorbers.

More specific examples may include 2-(2H-benzotriazol-2-yl)-4,6-bis(1-methyl-1-phenylethyl)phenol, 2-(2H-benzotriazol-2-yl)-6-(1-methyl-1-phenylethyl)-4-(1,1,3,3-tetramethylbutyl)phenol, octyl-3-[3-tert-butyl-4-hydroxy-5-(5-chloro-2H-benzotriazol-2-yl)phenyl]propionate, 2-ethylhexyl-3-[3-tert-butyl-4-hydroxy-5-(5-chloro-2H-benzotriazol-2-yl)phenyl]propionate, 2-(2H-benzotriazol-2-yl)-4,6-bis(1-ethyl-1-phenylethyl)phenol, 2-(5-chloro-2H-benzotriazol-2-yl)-6-(1,1-dimethylethyl)-4-methylphenol, 2,2'-methylenebis(6-(2H-benzotriazol-2-yl)-4-1,1,3,3-tetramethylbutyl)phenol, benzenepropanoic acid, 3-(2H-benzotriazol-2-yl)-5-(1,1-dimethylethyl)-4-hydroxy-, C7-9 branched and linear alkyl esters, 2-(2-hydroxy-5-tert-methylphenyl)-2H-benzotriazole, 2-(2H-benzotriazol-2-yl)-4,6-di-tert-pentylphenol, 2,2'-dihydroxy-4-methoxybenzophenone, and 2-(2'-hydroxy-5'-octylphenyl)benzotriazole. These may be used alone, or two or more thereof may be mixed for use.

The content of the other ultraviolet absorber in the weather-resistant resin layer is, for example, 0.1 to 30 mass%, and may be 1 to 20 mass%, 2 to 10 mass%, or 3 to 5 mass%.

As the resin as a binder component, for example, an acrylic resin having an ultraviolet absorber having a benzotriazole skeleton on the side chain is preferably used.

When the resin has a benzotriazole skeleton in the molecular structure, examples of the resin may include a resin having a benzotriazole skeleton on the side chain or the main chain, which can function as an ultraviolet absorber. In addition, the benzotriazole skeleton in this case may include a benzotriazole skeleton in which a part of the structure in the ultraviolet absorber having a benzotriazole skeleton is replaced with a single bond (corresponding to a covalent bond site with a resin).

The content of the acrylic resin having the ultraviolet absorber having a benzotriazole skeleton on the side chain in the weather-resistant resin layer is, for example, 10 to 60 mass%, and may be 15 to 55 mass%, 20 to 50 mass%, 25 to 45 mass%, or 30 to 40 mass%.

The thickness of the weather-resistant layer is adjusted depending on the application, and may be, for example, in the range of 3 $\mu$m to 15 $\mu$m, 4 $\mu$m to 13 $\mu$m, 5 $\mu$m to 11 $\mu$m, or 6 $\mu$m to 10 $\mu$m. When the film thickness of the weather-resistant layer is less than 3 $\mu$m, the weather resistance is poor. On the other hand, when the film thickness of the weather-resistant layer is more than 15 $\mu$m, the transmittance is poor, which affects plant growth and makes it difficult to handle the weather-resistant layer.

The weather-resistant layer may contain a small amount of additives as long as the object of the present invention is not impaired, and examples of the additives include additives such as lubricants such as inert particles, leveling agents for improving film formation quality, coloring agents such as pigments and dyes, stabilizers, flame retardants, and foaming agents.

For example, in order to further enhance the lubricity of the laminated film, it is also possible to provide a function of imparting lubricity to the weather-resistant layer. In this case, when the weather-resistant layer is provided on both surfaces of the laminated film, lubricity can be imparted to the layer on one side or both sides thereof.

Lubricity can be imparted by providing fine particles having an average particle diameter of 1.0 to 10 $\mu$m or a lubricant such as wax in the weather-resistant layer.

When the average particle diameter of the fine particles is less than 1.0 $\mu$m, slipperiness of the film tends to be insufficient depending on the particle amount, whereas when the average particle diameter is more than 10 $\mu$m, the particles will unfortunately fall off from the coating film.

Examples of the fine particles include organic fine particles such as polystyrene, polymethyl methacrylate, a methyl methacrylate copolymer, a methyl methacrylate copolymer crosslinked product, polytetrafluoroethylene, polyvinylidene fluoride, polyacrylonitrile, a benzoguanamine resin, and core shell type particles in which an outer shell of polystyrene particles is covered with an acrylic resin, and inorganic fine particles such as silica, alumina, titanium dioxide, kaolin, talc, graphite, calcium carbonate, feldspar, molybdenum disulfide, carbon black, and barium sulfate. Among them, organic fine particles are preferable. These may be used alone, or two or more thereof may be mixed for use.

[Laminated film]

The laminated film of the present invention is a laminated film containing the heat-ray reflection layer and the weather-resistant layer on at least one surface of the heat-ray reflection layer.

In the present invention, the spectral transmittance refers to a value obtained by measurement with a spectrophotometer. The spectral transmittance at a wavelength of 300 to 1,800 nm was measured at intervals of 2 nm to calculate the transmittance at each wavelength. The measurement is performed at 25°C under an air atmosphere, and the incident angle of the measuring light is set to 0 degree.

In addition, the weather resistance test in the present invention refers to an irradiation test performed using a metal halide lamp type weather resistance tester (product name: METAL WEATHER Tester, model: KW-R4CI-A, light source: water-cooling jacket type metal halide lamp) manufactured by Daipla Wintes Co., Ltd.) and a filter KF-1 (transmitted light wavelength: 290 to 780 nm) at ultraviolet irradiance of 900 W/m$^2$ and a black panel temperature of 63°C without rainfall. Film spectral transmittance before and after the irradiation test is evaluated.

In the present invention, it is preferable that the initial spectral transmittance of the laminated film be 80% or more at 450 nm and 85% or more at 660 nm, and the spectral transmittance after the weather resistance test be 75% or more at 450 nm and 80% or more at 660 nm.

The initial spectral transmittance may be, for example, 810 or more, 82% or more, 83% or more, 84% or more, 85% or more, 86% or more, or 87% at 450 nm, and may be, for example, 86% or more, 87% or more, 88% or more, 89% or more, or 90% or more at 660 nm.

The spectral transmittance after the weather resistance test may be, for example, 76% or more, 77% or more, 780 or more, 79% or more, 80% or more, 810 or more, 82% or more, 83% or more, or 84% or more at 450 nm, and may be, for example, 810 or more, 82% or more, 83% or more, 84% or more, 85%, 86% or more, 87% or more, 88% or more, or 89% or more at 660 nm.

In addition, in the present invention, the secondary reflection band of the laminated film refers to an appearance band of a secondary reflection peak that occurs through a multilayer laminated film using multilayer interference.

As in Radford et al., "Reflectivity of Iridescent Coextruded Multilayered Plastic Films" (POLYMER ENGINEERING AND SCIENCE, May, 1973, Vol. 13, NO. 3), the multilayer interference film causes high-order reflections having reflection peaks that occur at 1/2 wavelength and 1/3 wavelength that are overtones with respect to a main reflection peak. In a case where the ratio of the optical thickness of the second layer to the optical thickness of the first layer for the main reflection peak is 1.0, it is theoretically possible to remove the second order (1/2 wavelength of the main reflection peak) and the fourth order (1/4 wavelength of the main reflection peak) of the high-order peaks.

However, in an actual manufacturing site, it is difficult to remove the high-order reflection, and a secondary reflection peak actually appears. In particular, the heat ray has a reflection band of 800 to 1400 nm, and secondary reflection occurs particularly at 400 to 700 nm in the visible range.

In addition, the spectral transmittance in the secondary reflection band is 60% or more, but for example, 65% or more, 70% or more, or 75% or more is more preferable for securing the transmittance.

In the present invention, the spectral transmittance in the secondary reflection band refers to a value obtained by measuring the spectral transmittance using a spectrophotometer (UV3600 manufactured by Shimadzu Corporation) at intervals of 2 nm.

In the present invention, the haze (Hz) of the laminated film preferably has a small haze variation over long-term use, and for example, the haze difference before and after the weather resistance test treatment is within 1.0%, preferably within 0.4%.

The measurement of the haze (Hz) refers to a value obtained by measurement in accordance with JIS K7361-1 using a haze meter (Nippon Denshoku Industries Co., Ltd., NDH-4000).

The measurement of the haze (Hz) after the weather resistance test treatment is also performed in the same manner.

In the present invention, the color difference of the laminated film preferably has a small color difference variation over long-term use. For example, a difference obtained by subtracting untreated initial value data from data after a weather resistance test treatment is represented as $\Delta$E (before and after treatment), and $\Delta$E (before and after treatment) is 15.0 or less, preferably 10.0 or less.

The measurement of the color difference refers to a value obtained by measurement in accordance with JIS Z8722 using an automatic color-difference meter (model Z-300A manufactured by Nippon Denshoku Industries Co., Ltd.).

$$\Delta E^*_{ab} = [(\Delta L^*)^2 + (\Delta a^*)^2 + (\Delta b^*)^2]_{1/2}$$

The measurement of the color difference after the weather resistance test treatment is also performed in the same manner.

From the viewpoint of providing high total light transmittance and light diffusibility while exerting a heat ray reflection function, the laminated film of the present invention preferably has an average transmittance of 75% or more, more preferably 80% or more at a wavelength of 400 nm to 800 nm, and preferably has an average transmittance of 150 or less, more preferably 10% or less, still more preferably 5% or less at a wavelength of 900 nm to 1000 nm.

For example, when the laminated film of the present invention is applied to a film for protected horticulture, visible light serving as a driving source for photosynthesis can be sufficiently supplied to plants. Furthermore, since the laminated film of the present invention has high total light transmittance, it is considered that the growth of plants can be sufficiently promoted.

In addition, since the average transmittance of heat rays is 20% or less, for example, when the laminated film of the present invention is applied to a film for protected horticulture, heat rays which would otherwise increase the temperature in an agricultural house can be sufficiently shielded. Furthermore, since heat generation as caused by a heat-ray absorbing film is small through the film itself, it is possible to suppress an increase in the temperature in the agricultural house and to reduce the cost required for dehumidifying and cooling.

(Other layers)

The laminated film may be appropriately provided with other known films or layers as long as the action and effect of the present invention are not hindered. Examples thereof may include a lubricity-imparting layer and a diffusing layer.

For example, in order to further enhance the lubricity of the laminated film, a lubricity-imparting layer having a function of imparting lubricity can be appropriately provided. In this case, the lubricity-imparting layer can be provided on at least one surface, preferably both surfaces of the laminated film.

[Application of laminated film]

The laminated film of the present invention can be suitably used, for example, in the field of protected horticulture, the field of construction materials such as window materials, and the field of transportation equipment such as automobiles, airplanes, and trains. In addition, for example, the present invention can also be suitably used for covers, curtains, lighting equipment, display devices, storage, packaging, and the like of outdoor facilities such as agricultural houses.

In the laminated film of the present invention, the laminated film can be used as it is, or the laminated film can be appropriately processed for use. Specific examples of using the film as it is may include a form in which a laminated film is attached to an object (for example, a window material such as glass). Specific examples of processing of the laminated film for use may include a form of using the laminated film as a woven or knitted fabric described below.

[Method for producing laminated film]

A detailed description is made of a method for producing a laminated film according to an embodiment of the present invention. Note that the manufacturing method described below is an example, and the present invention is not limited thereto. In addition, different aspects can also be obtained with reference to the following.

The laminated film of the present invention includes a heat-ray reflection layer and a weather-resistant layer provided on at least one surface of the heat-ray reflection layer.

First of all, a description is made of a method for producing the heat-ray reflection layer by taking as an example a case where the heat-ray reflection layer has a multilayer laminated structure in which at least two types of resin layers having different refractive indices are alternately laminated.

The multilayer laminated structure according to an embodiment of the present invention can be obtained by alternately superposing a polymer composing a first layer and a polymer composing a second layer in a molten state using a multilayer feed block device to create, for example, an alternately laminated structure of 99 or more layers in total, and providing on both sides thereof protective layers.

The multilayer laminated structure refers to a multilayer laminated structure including the protective layer when a protective layer is present. Among them, it is preferable to use the same polymer as the polymer of the first layer for the protective layer, and simultaneously create a multilayer laminated structure also including the protective layer by a co-extrusion method.

The multilayer laminated structure may be laminated such that the thickness of each layer of the first layer and the second layer has a desired inclined structure. This is obtained by, for example, changing the interval and length of the slits in the multilayer feed block device.

After lamination to a desired number of laminations by the above-described method, the laminate is extruded from the die and then cooled on a casting drum to produce a multilayer unstretched film. The multilayer unstretched film is preferably stretched in at least one axial direction (the one axial direction is a direction along the film surface) of an axial direction of a film forming machine (sometimes referred to as a machine direction, a longitudinal direction or MD) or a direction orthogonal thereto in a film plane (sometimes referred to as a transverse direction, a transverse direction, or TD). From the viewpoint of improving the mechanical properties, it is more preferable to stretch the film biaxially in the machine direction and the transverse direction. The stretching temperature is preferably in the range of the glass transition temperature (Tg) to (Tg + 20) °C of the polymer of the first layer. By performing stretching at a temperature lower than the conventional temperature, the orientation characteristics of the film can be more highly controlled.

The stretch ratio is preferably 2.0 to 6.5 times, more preferably 3.0 to 5.5 times in both the machine direction and the transverse direction. It is preferable that the larger the stretch ratio be within the above range, because the smaller the variation in refractive index in the plane direction of the individual layers in the first layer and the second layer due to the thinning caused by stretching, the more uniform the light interference of the multilayer laminated structure in the plane direction, and also the larger the difference in refractive index between the first layer and the second layer in the stretching direction. As a stretching method, either uniaxial stretching only in the machine direction or the transverse direction, sequential biaxial stretching in which stretching in the machine direction and stretching in the transverse direction are separately performed, or simultaneous biaxial stretching in which stretching in the machine direction and stretching in the transverse direction are simultaneously performed can be applied. As each stretching method in the machine direction and the transverse direction, a known stretching method such as heating and stretching with a rod-like heater, roll heating and stretching, or tenter stretching can be used, but tenter stretching is preferable from the viewpoint of reduction of scratches due to contact with a roll, stretching speed, and the like.

In addition, by performing toe-in (relaxation) of the film in the stretching direction within a range of 1 to 150 while further performing heat fixation at a temperature of (Tg) to (Tg + 30) °C after stretching, the thermal stability (for example, heat shrinkage rate) of the obtained multilayer laminated structure can be highly controlled.

Next, a description is made of a method for forming the weather-resistant layer.

The weather-resistant layer, which is provided on at least one surface of the heat-ray reflection layer, may be provided directly on the heat-ray reflection layer or may be provided via another layer.

The formation of the weather-resistant layer is not particularly limited, but may be performed by, for example, a coating method, a spin coating method, or a transfer method. Among them, the weather-resistant layer is preferably formed by coating.

Specifically, a known coating technique such as a bar coating method, a roll coating method, a knife edge coating method, a gravure coating method, or a curtain coating method can be used as a method for coating and forming the weather-resistant layer on the surface of the heat-ray reflection layer. In addition, before the weather-resistant layer is applied, the heat-ray reflection layer may be subjected to a surface treatment (flame treatment, corona treatment, plasma treatment, ultraviolet treatment, and the like). The coating liquid used in coating is obtained by dispersing the above-described particles and resin, and may be an aqueous dispersion or a dispersion dispersed with an organic solvent.

When the weather-resistant layer is formed by coating, the coating to the heat-ray reflection layer (for example, the multilayer laminated structure) can be performed at any stage, but is preferably performed after the process of producing the multilayer laminated structure.

<Film for protected horticulture>

The film for protected horticulture of the present invention includes the laminated film.

The film for protected horticulture only needs to be a film that contains the laminated film. In other words, it may be composed only of the laminated film, or may be provided with another known film or layer.

<Woven or knitted fabric>

The woven or knitted fabric of the present invention includes a thin belt-shaped tape cut from the laminated film.

The woven or knitted fabric only needs to be a thin belt-shaped tape cut from the laminated film. In other words, it may be composed only of the thin belt-shaped tape, or may be provided with another known tape or layer.

The woven or knitted fabric is, for example, a flat or warp knitted fabric obtained by using the thin belt-shaped tape. As another example, the woven or knitted fabric is a warp knitted fabric obtained by using the thin belt-shaped tape as an inserting yarn.

In addition, the woven or knitted fabric is, for example, a woven fabric obtained by using the thin belt-shaped tape as a warp or a weft and using a filament yarn or the like as a weft or a warp.

The woven or knitted fabric can improve the mechanical strength such as winding property, blocking resistance, tear resistance, and durability of the laminated film, as compared with, for example, the case of using a single film of only the heat-ray reflection layer.

Furthermore, in the woven or knitted fabric, air permeability can be secured by openings formed between the thin belt-shaped tapes, the filament yarns, and the like. As described above, since the woven or knitted fabric is generally excellent in air permeability as compared with a case where the laminated film is used as it is alone, so that dew formation on the lower surface of the film, and therefore formation of water droplets which would otherwise hit plants can be prevented when the temperature difference between the cultivation section and the ceiling section increases at night, particularly in the morning. As a result, occurrence of discoloration or deterioration of fruits, leaves, flowers, and the like of plants can be prevented.

In the woven or knitted fabric, since openings are formed, it is possible to avoid excessively shielding ultraviolet light. Avoiding excessive shielding of ultraviolet light may be effective, for example, in improving coloring during growth of fruits such as eggplant and in supporting normal pollinating activities performed by bees in agricultural houses.

In addition, in the woven or knitted fabric, the thickness of the filament yarn or the like may be 0.01 to 0.30 times the width of the thin belt-shaped tape, and the interval between the adjacent thin belt-shaped tapes may be 0.1 to 0.5 times the width of the thin belt-shaped tape. In the present invention, the "filament yarn or the like" refers to a filament yarn or a spun yarn. As the filament yarn, either a monofilament yarn or a multifilament yarn may be used, but the filament yarn is not particularly limited.

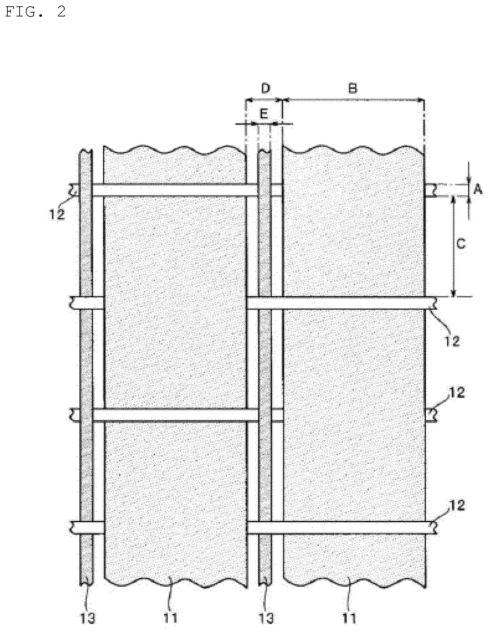

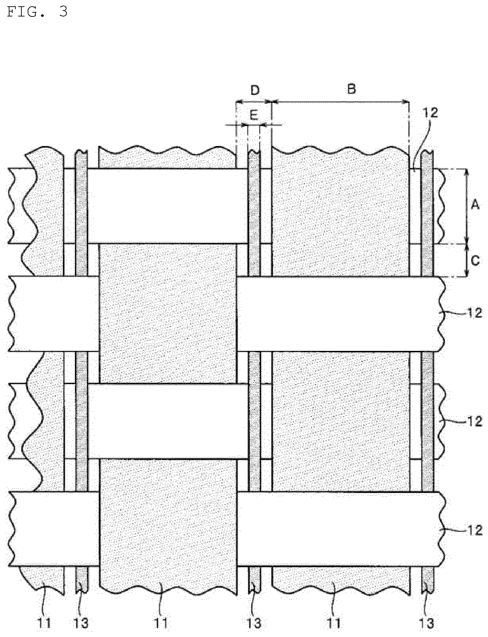

As shown in Figs. 2 and 3, a thin belt-shaped tape (warp) 11 obtained by cutting (slitting) a laminated film into a thin belt-shaped is woven with filament yarns or the like (weft yarns) 12, for example. By setting the thickness A of the filament yarn or the like (weft yarn) 12, the width B of the thin belt-shaped tape (warp yarn) 11, the interval C between the adjacent filament yarns or the like (weft yarns) 12, and the interval D between the adjacent thin belt-shaped tapes (warp yarns) 11 to be in specific ranges, the porosity of the woven or knitted fabric is set to be in an appropriate range, and the ultraviolet transmittance is set to be in an appropriate range while ensuring a high total light transmittance and a heat ray reflectance that are not inferior to those in a case where the laminated film is used alone. For firm weaving, filament yarns or the like (warp yarns) 13 having a thickness E are interposed as warp yarns between the adjacent thin belt-shaped tapes (warp yarns) 11.

More specifically, in the woven or knitted fabric, by setting the thickness of the filament yarn or the like (weft yarn) 12 to 0.01 to 0.30 times the width of the thin belt-shaped tape (warp yarn) 11, and setting the interval between the adjacent thin belt-shaped tapes (warp yarns) 11 to 0.1 to 0.5 times the width of the thin belt-shaped tape (warp yarn) 11, the porosity can be set within an appropriate range, and the ultraviolet transmittance can be set within an appropriate range while ensuring a high total light transmittance and heat ray reflectance that are not inferior to those in a case where the laminated film is used alone. An interval between adjacent filament yarns (weft yarns) 12 is preferably in a range of 1.0 to 10 mm.

The width of the thin belt-shaped tape (warp yarn) 11 is preferably 1 to 10 mm, more preferably 2 to 6 mm, still more preferably 3 to 5 mm. The interval between the thin belt-shaped tapes (warp yarns) 11, that is, the distance between the edge sides of the adjacent thin belt-shaped tapes (warp yarns) 11 is preferably 0.2 to 1.0 mm, more preferably 0.4 to 0.8 mm, still more preferably 0.5 to 0.7 mm. The thickness of the filament yarn or the like (weft yarn) 12 is preferably 0.05 to 0.35 mm, more preferably 0.1 to 0.3 mm, still more preferably 0.15 to 0.25 mm. In the woven or knitted fabric of the present invention, by setting the width of the thin belt-shaped tape of the woven or knitted fabric, the thickness of the filament yarn or the like, the interval between the adjacent filament yarns or the like, and the interval between the adjacent thin belt-shaped tapes as described above, the porosity can be set to an appropriate range, and the ultraviolet transmittance can be set to an appropriate range while ensuring a high total light transmittance and a heat ray reflectance that are not inferior to those in a case where the laminated film is used alone.

The porosity of the woven or knitted fabric formed from the laminated film is preferably 10 to 30%. The "porosity" in the present invention is determined by the following formula: [S ($cm^2$)/100 ($cm^2$)] $\times$ 100, in which when a square portion of 10 cm in length and width (area: 100 $cm^2$) on one surface of the woven or knitted fabric is observed from the direction perpendicular to the surface, a portion through which the back surface side is visible with no blockage is defined as a hole, and the sum (S$cm^2$) of the areas of the holes (referred to as hole areas) is determined.

In the woven or knitted fabric of the present invention, when the porosity is 10% or more, the air permeability of the woven or knitted fabric can be improved. When a skylight provided on the ceiling is opened at night when photosynthesis is not performed to lower the temperature in an agricultural house in preparation for temperature rise in the daytime of the next day, the air heated in the daytime in the lower part of the agricultural house can be released to the outside through the woven or knitted fabric. In addition, even when the air in the upper part close to the roof is cooled at night, particularly in the morning, the woven or knitted fabric of the present invention is preferable because dew formation on the lower surface of the woven or knitted fabric, and therefore formation of water droplets which would otherwise hit plants to cause deterioration in quality such as discoloration and deterioration of fruits, leaves, flowers, and the like of the plants, and which would otherwise cause deterioration in the woven or knitted fabric itself can be prevented. When the porosity is 30% or less, the woven or knitted fabric of the present invention is preferable because a high total light transmittance and a high heat ray reflectance provided by the laminated film can be secured.

EXAMPLES

Hereinafter, a specific description is made of the present invention with reference to Examples, but the present invention is not limited to the following Examples. Physical properties and characteristics in Examples were measured or evaluated by the following methods. The word "part" refers to "part by mass".

In addition, each measurement, evaluation, and the like in Examples were performed as follows.

(1) Total thickness of film and thickness of each layer

For the total thickness of film, a film sample was nipped in a spindle detector (K107C manufactured by Anritsu Corporation), and the thickness was measured at 10 points at different positions with a digital differential electron micrometer (K351 manufactured by Adachi Electric Co., Ltd.) to calculate an average value as the total thickness of film.

The thickness of each layer of the laminated film containing the weather-resistant layer was measured by the following method. The film was cut out into a size of 2 mm in the film machine direction and 2 cm in the transverse direction, fixed in an embedding capsule, and then embedded in an epoxy resin (EPOMOUNT manufactured by Refine Tech Ltd.). The embedded sample was cut vertically in the transverse direction with a microtome (ULTRACUT UCT manufactured by LEICA), and the thickness of each layer of the weather-resistant layer, the heat-ray reflection layer, and the protective layer was measured with an optical microscope at the cut surface.

Note that whether the layer is the first layer or the second layer can be determined by the aspect of the refractive index, but when it is difficult to do so, it can be determined based on an electronic state by analysis using NMR or analysis using TEM. The refractive index of each layer can also be determined from a single layer film having the same composition as that of each layer but having a larger thickness.

(2) Spectral transmittance

The spectral transmittance at a wavelength of 300 to 1,800 nm was measured using a spectrophotometer (UV3600 manufactured by Shimadzu Corporation) at intervals of 2 nm. A spectral spectrum of the obtained laminated film was obtained, and transmittance at each wavelength (450 nm, 660 nm) was obtained.

The measurement was performed at 25°C under an air atmosphere, and the incident angle of the measuring light was set to 0 degree.

The spectral transmittance in the secondary reflection band refers to a value obtained by measuring the spectral transmittance using a spectrophotometer (UV3600 manufactured by Shimadzu Corporation) at intervals of 2 nm.

(4) Weather resistance test

For the weather resistance test, an irradiation test was performed using METAL WEATHER Tester (model: KW-R4CI-A, light source: water-cooling jacket type metal halide lamp) manufactured by Daipla Wintes Co., Ltd.) and a filter KF-1 (transmitted light wavelength: 290 to 780 nm) at ultraviolet irradiance of 900 W/m$^2$ and a black panel temperature of 63°C without rainfall. The film spectral transmittance before and after the irradiation test was evaluated.

(5) Evaluation of total light transmittance and haze

The measurement of the total light transmittance (TT) and the haze (Hz) was performed in accordance with JIS K7361-1 using a haze meter (Nippon Denshoku Industries Co., Ltd., NDH-4000).

The measurement of the total light transmittance (TT) and the haze (Hz) after the weather resistance test treatment was also performed in the same manner. The differences obtained by subtracting the untreated initial value data from the data after the weather resistance test treatment are shown as ΔTT and ΔHaze in Table 1.

(6) Evaluation of color difference

The measurement of the color difference was performed in accordance with JIS Z8722 using an automatic color-difference meter (model Z-300A manufactured by Nippon Denshoku Industries Co., Ltd.).

$$\Delta E^*_{ab} = [(\Delta L^*)^2 + (\Delta a^*)^2 + (\Delta b^*)^2]_{1/2}$$

The measurement of the color difference after the weather resistance test treatment was also performed in the same manner. For ΔE (before and after treatment), the difference obtained by subtracting the untreated initial value data from the data after the weather resistance test treatment is shown in Table 1 as ΔE (before and after treatment).

(7) Evaluation of adhesion

Evaluation of adhesion after the weather resistance test treatment was performed as follows. Cross-cutting of squares (100 squares of 1 mm$^2$) was performed, and a cellophane tape (manufactured by Nichiban Co., Ltd.) having a width of 24 mm was attached on the cross-cut portion and rapidly peeled off at a peeling angle of 90°, and then the peeled surface was observed and evaluated in accordance with the following criteria.

<Criteria for evaluation of adhesion>

⊙: Peeled area is 0% or more and less than 5% (adhesion is extremely good)
○: Peeled area is 5% or more and less than 50% (adhesion is good)
×: Peeled area is more than 50% (adhesion is poor)

The term "no" means that no peeling was observed at all in the heat-ray reflection layer in the observation of the cross-cut portion evaluated for adhesion.

(7) Evaluation of weather resistance (optical characteristics)

From the measurement results of the spectral transmittance after the weather resistance test, evaluation was performed according to the following criteria.

<Criteria for evaluation of weather resistance>

⊙: Both the spectral transmittances at 450 and 660 nm are 80% or more (extremely good)
○: The spectral transmittances are 80% or more at any one of the above-mentioned wavelengths and 65% or more and less than 80% at the other wavelength (weather resistance is good)
×: The spectral transmittance is less than 65% at least either wavelength of the above-mentioned wavelengths (weather resistance is poor)

[Preparation of heat-ray reflection layer A]

Polyethylene-2,6-naphthalate (hereinafter, referred to as "PEN") having an intrinsic viscosity (ortho-chlorophenol, 35°C) of 0.62 dl/g was prepared as a polyester for the first layer and the protective layer, and cyclohexanedimethanol copolymerized polyethylene terephthalate (hereinafter, also referred to as "PETG") having an intrinsic viscosity (ortho-chlorophenol, 35°C) of 0.77 dl/g obtained by copolymerizing 30 mol% of cyclohexanedimethanol was prepared as a polyester for the second layer.

The polyester for the first layer and for the protective layer was dried at 180°C for 5 hours and then supplied to an extruder, and the PEN of the first layer was brought into a molten state at 290°C. The PETG of the second layer was dried at 120°C for 10 hours, then supplied to an extruder, and heated to 230°C to be brought into a molten state.

Thereafter, after the PEN of the first layer was branched into 137 layers and the PETG of the second layer was branched into 138 layers, the PEN layer of the first layer and the PETG layer of the second layer were alternately laminated, and a protective layer was laminated on both surfaces of a laminated structure portion in which the ratio of the maximum layer thickness to the minimum layer thickness in each of the first layer and the second layer continuously changed to 1.4 times at the maximum/minimum using a multilayer feed block device, and the resultant was guided to a die while maintaining the laminated state, and cast on a casting drum. Then, an unstretched multilayer laminated film having the protective layer composed of the PEN layer on the outermost layers of both surfaces of the film and having 275 layers in total in the laminated structure portion was created. The amount of the protective layer supplied was adjusted such that the thickness after stretching was as shown in Table 1. In addition, the discharge amounts of the resins of the first layer and the second layer were adjusted such that the optical thickness ratios of the first layer and the second layer of the laminated structure portion excluding the protective layer were equal.

The unstretched film obtained as described above was preheated at 120°C, and further heated from 15 mm above with an IR heater at 900°C to stretch the film 3.5 times in the machine direction between rolls at a low speed and a high speed. Subsequently, the film was supplied to a tenter and then stretched 4.5 times in the transverse direction at 140°C. The obtained biaxially oriented film was heat-fixed at a temperature of 190°C for 30 seconds, and then subjected to 1.5% toe-in (relaxation) in the transverse direction. A roll having a thickness of the heat-ray reflection layer of 55 $\mu$m, a total thickness of the protective layers on both sides of 13 um, and a width of 2000 mm was obtained.

[Preparation of coating liquid A and formation of weather-resistant resin layer]

A special acrylic resin ("UV-G13" manufactured by Nippon Shokubai Co., Ltd.), an ultraviolet absorber ("Tinuvin 477" manufactured by BASF SE:
hydroxyphenyltriazine (HPT)-based ultraviolet absorber), and a solvent (toluene) were mixed at a mass ratio shown in Table 1 to prepare a coating liquid. Using a bar coater, a coating was applied onto the surface of the heat-ray reflection layer polyester film and then dried to form a weather-resistant layer having a predetermined thickness shown in Table 1.

[Preparation of coating liquid B]

A coating liquid B was obtained in the same manner as in the case of the coating liquid A except that a triazine-based ultraviolet absorber ("ADK STAB LA-F70" manufactured by ADEKA Corporation) was used. Using a bar coater, this coating liquid was applied onto the surface of the heat-ray reflection layer polyester film and then dried to form a weather-resistant layer having a predetermined thickness shown in Table 1.

[Preparation of coating liquid C]

A coating liquid C was obtained in the same manner as in the case of the coating liquid A except that a benzophenone-based ultraviolet absorber ("Uvinal 3050" manufactured by BASF SE) was used. Using a bar coater, this coating liquid was applied onto the surface of the heat-ray reflection layer polyester film and then dried to form a weather-resistant layer having a predetermined thickness shown in Table 1.

[Preparation of coating liquid D]

A coating liquid D was obtained in the same manner as in the case of the coating liquid A except that a benzotriazole-based ultraviolet absorber ("Tinuvin 326" manufactured by BASF SE) was used. Using a bar coater, this coating liquid was applied onto the surface of the heat-ray reflection layer polyester film and then dried to form a weather-resistant layer having a predetermined thickness shown in Table 1.

[Preparation of coating liquid E]

A coating liquid E was obtained in the same manner as in the case of the coating liquid A except that a benzotriazole-based ultraviolet absorber ("KEMISORB 111" manufactured by Chemipro Kasei Co., Ltd.) was used. Using a bar coater, this coating liquid was applied onto the surface of the heat-ray reflection layer polyester film and then dried to form a weather-resistant layer having a predetermined thickness shown in Table 1.

[Preparation of coating liquid F]

A coating liquid F was obtained in the same manner as in the case of the coating liquid A except that a benzotriazole-based ultraviolet absorber ("Tinuvin 109" manufactured by BASF SE) was used. Using a bar coater, this coating liquid was applied onto the surface of the heat-ray reflection layer polyester film and then dried to form a weather-resistant layer having a predetermined thickness shown in Table 1.

[Example 1]

The coating liquid A was applied to the heat-ray reflection layer A (thickness: 55 $\mu$m) using a bar coater. The resultant was placed and dried in an oven at 120°C for 1 minute to solidify the coating layer, thereby producing a laminated film. The thickness of the obtained laminated film was 69 $\mu$m (heat-ray reflection layer A: 55 $\mu$m, weather-resistant layer: 14 um). The obtained laminated film was evaluated by the method shown above. The results are shown in Table 1.

[Examples 2 to 7, 9, and 10, and Comparative Examples 1 to 6]

A laminated film was prepared in the same manner as in Example 1 except that each component of the coating liquid A was adjusted so as to have the value shown in Table 1, and the same evaluation as in Example 1 was performed.

[Example 8]

A laminated film was prepared in the same manner as in Example 1 except that each component of the coating liquid B was adjusted so as to have the value shown in Table 1, and the same evaluation as in Example 1 was performed.

[Comparative Example 7]

A laminated film was prepared in the same manner as in Example 1 except that the coating liquid C was used instead of the coating liquid A and each component of the coating liquid B was adjusted so as to have the value shown in Table 1, and the same evaluation as in Example 1 was performed.

[Comparative Example 8]

A laminated film was prepared in the same manner as in Example 1 except that the coating liquid D was used instead of the coating liquid A and each component of the coating liquid C was adjusted so as to have the value shown in Table 1, and the same evaluation as in Example 1 was performed.

[Comparative Example 9]

A laminated film was prepared in the same manner as in Example 1 except that the coating liquid E was used instead of the coating liquid A and each component of the coating liquid D was adjusted so as to have the value shown in Table 1, and the same evaluation as in Example 1 was performed.

[Comparative Example 10]

A laminated film was prepared in the same manner as in Example 1 except that the coating liquid F was used instead of the coating liquid A and each component of the coating liquid E was adjusted so as to have the value shown in Table 1, and the same evaluation as in Example 1 was performed.
The formulation and the results are shown in Table 1 below.

[Table 1]

| | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|---|---|---|---|---|---|---|---|
| Thickness | Heat-ray reflection layer (μm) | 55 | 55 | 55 | 55 | 55 | 55 | 55 | 55 | 55 | 55 | 55 | 55 | 55 | 55 | 55 | 55 | 55 | 55 | 55 | 55 |
| | Weather-resistant layer (μm) | 14 | 6 | 10 | 7 | 12 | 4.5 | 13 | 3.5 | 7 | 10 | 18 | 7 | 7 | 7 | 1 | 18 | 7 | 7 | 7 | 7 |
| | Total (μm) | 69 | 61 | 65 | 62 | 67 | 60 | 68 | 59 | 62 | 65 | 73 | 62 | 62 | 62 | 56 | 73 | 62 | 62 | 62 | 62 |
| Coating film resin composition | Resin (%) | 59 | 62 | 65 | 82 | 62 | 80 | 80 | 58 | 67 | 74 | 55 | 100 | 90 | 50 | 65 | 65 | 80 | 67 | 67 | 80 |
| | UV absorber (%) | 41 | 38 | 35 | 18 | 38 | 20 | 20 | 42 | 33 | 26 | 45 | 0 | 10 | 50 | 35 | 35 | 20 | 33 | 33 | 20 |
| | Coating liquid | A | A | A | A | A | A | A | B | A | A | A | A | A | A | A | A | C | D | E | F |

| | | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|---|---|---|---|---|---|---|---|---|
| Initial | △Haze | % | 0.6 | 0.4 | 0.5 | 0.6 | 0.5 | 0.5 | 0.6 | 0.7 | 0.5 | 0.4 | 0.5 | 0.4 | 0.4 | 0.7 | 0.5 | 0.5 | 0.5 | 0.4 | 0.6 | 0.4 |
| | △TT | % | 85.8 | 84.8 | 85.6 | 85.7 | 85.0 | 84.9 | 85.4 | 85.3 | 85.2 | 85.7 | 85.5 | 85.3 | 85.2 | 85.7 | 85.4 | 85.1 | 85.9 | 84.8 | 84.8 | 85.5 |
| | Spectral transmittance (λ 450 nm) | % | 80 | 86 | 86 | 87 | 86 | 87 | 86 | 84 | 87 | 84 | 76.1 | 86.8 | 86 | 78 | 86 | 77 | 83.5 | 859 | 86.0 | 84.8 |
| | Spectral transmittance (λ 660 nm) | % | 86 | 89 | 89 | 90 | 86 | 90 | 89 | 87 | 90 | 88 | 85.1 | 91.6 | 89 | 84 | 91 | 86 | 87.9 | 90.8 | 86.1 | 89.3 |
| | Minimum spectral transmittance of secondary reflection band | % | 77 | 77 | 77 | 77 | 77 | 77 | 77 | 77 | 77 | 77 | 76.5 | 76.5 | 77 | 77 | 77 | 77 | 58.6 | 58 . 6 | 70.6 | 70.6 |

EP 4 417 420 A1

(continued)

| | | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|---|---|---|---|---|---|---|---|---|---|
| After weather resistance treatment — ΔHaze | % | 0.2 | 0.1 | 0.1 | 0.1 | 0.1 | 0.1 | 0.1 | 0.3 | 0.1 | 0.1 | 0.1 | 0.5 | 0.1 | 0.1 | 0.1 | 0.2 | 0.1 | 0.1 | 0.2 | 0.1 |
| After weather resistance treatment — ΔTT | % | 0.3 | 0.3 | 0.3 | 0.8 | 0.2 | 0.6 | 0.6 | 0.6 | 0.3 | 0.3 | 0.6 | 16.1 | 5.7 | 0.3 | 14.1 | 0.2 | 12.0 | 5.4 | 4.0 | 4.0 |
| After weather resistance treatment — ΔE (before and after treatment) | | 0.6 | 0.7 | 0.5 | 2.6 | 0.5 | 2.9 | 1.8 | 5.9 | 0.8 | 0.5 | 0.7 | 31.7 | 11.0 | 0.6 | 28.0 | 0.6 | 25.1 | 16.0 | 13.0 | 13.0 |
| After weather resistance treatment — Adhesion | | ○ | ⊙ | ⊙ | ○ | ⊙ | ⊙ | ⊙ | ○ | ⊙ | ⊙ | ○ | × | ○ | ○ | ○ | ○ | × | × | × | × |
| After weather resistance treatment — Adhesion (delamination) | | No | No | No | No | No | No | No | No | No | No | No | Delaminated in heat-ray reflection layer | No | No | No | No | Delaminated in heat-ray reflection layer | Delaminated in heat-ray reflection layer | Delaminated in heat-ray reflection layer | Delaminated in heat-ray reflection layer |
| After weather resistance treatment — Spectral transmittance (λ 450 nm) | % | 859 | 83 | 84 | 78 | 83 | 81 | 84 | 76 | 85.8 | 82 | 73.1 | 37.4 | 56 | 75 | 46 | 68 | 40.2 | 60.7 | 66.7 | 63.8 |
| After weather resistance treatment — Spectral transmittance (λ 660 nm) | % | 85.7 | 87 | 88 | 86 | 88 | 88 | 89 | 88 | 89.0 | 88 | 84.1 | 77.1 | 81 | 82 | 75 | 85 | 72.4 | 79.0 | 76.0 | 79.0 |
| After weather resistance treatment — Evaluation of weather resistance (optical characteristics) | | ⊙ | ⊙ | ⊙ | ○ | ⊙ | ⊙ | ⊙ | ○ | ⊙ | ⊙ | ○ | × | × | ○ | × | ○ | × | × | × | × |

As can be seen from Table 1, it has been found that for the laminated film of Examples of the present invention, deterioration in appearance and yellowing of a film due to ultraviolet rays can be suppressed, and high light transmittance can be maintained, as compared with the laminated film of Comparative Examples.

**Claims**

1.  A laminated film comprising a heat-ray reflection layer and a weather-resistant layer on at least one surface of the heat-ray reflection layer, wherein

    the heat-ray reflection layer has a multilayer laminated structure in which 20 or more layers of a first layer mainly composed of a resin and a second layer mainly composed of a resin are alternately laminated in a thickness direction,
    the first layer contains polyethylene naphthalate,
    a protective layer is provided on at least one surface of the multilayer laminated structure,
    the protective layer has a thickness of 10 $\mu$m or less,
    the protective layer is a layer mainly composed of the resin of the first layer,
    the weather-resistant layer is composed of a resin composition containing an ultraviolet absorber having a triazine skeleton, and a content of the ultraviolet absorber in the weather-resistant layer is 8 to 45 mass%,
    the weather-resistant layer has a thickness of 3 to 15 um, and
    a secondary reflection band of the laminated film is 400 to 700 nm, and a spectral transmittance in the secondary reflection band is 60% or more.

2.  The laminated film according to claim 1, wherein the protective layer is a layer mainly composed of polyethylene naphthalate.

3.  The laminated film according to claim 1 or 2,
    wherein the weather-resistant layer has a binder component.

4.  The laminated film according to claim 3, wherein the binder component contains an acrylic resin.

5.  The laminated film according to any one of claims 1 to 4, wherein a refractive index of the first layer and a refractive index of the second layer in the heat-ray reflection layer are different from each other.

6.  The laminated film according to any one of claims 1 to 5, containing the protective layer on both surfaces of the multilayer laminated structure.

7.  The laminated film according to any one of claims 1 to 6, containing the weather-resistant layer on both surfaces of the heat-ray reflection layer.

8.  The laminated film according to any one of claims 1 to 7, wherein the laminated film has an initial spectral transmittance of 80% or more at 450 nm and 85% or more at 660 nm, and a spectral transmittance after a weather resistance test (metal halide lamp type weather resistance tester, ultraviolet irradiance: 900 W/m$^2$, treated for 320 hours under environment at temperature of 63°C) of 75% or more at 450 nm and 80% or more at 660 nm.

9.  A film for protected horticulture comprising the laminated film according to any one of claims 1 to 8.

10. A woven or knitted fabric comprising a thin belt-shaped tape cut from the laminated film according to any one of claims 1 to 8.

FIG. 1

LAMINATED FILM

WEATHER-RESISTANT LAYER

PROTECTIVE LAYER

MULTILAYER LAMINATED STRUCTURE

PROTECTIVE LAYER

WEATHER-RESISTANT LAYER

FIG. 2

FIG. 3

## INTERNATIONAL SEARCH REPORT

| International application No. |
|---|
| **PCT/JP2022/032348** |

**A.    CLASSIFICATION OF SUBJECT MATTER**

*B32B 27/36*(2006.01)i; *A01G 9/14*(2006.01)i; *A01G 13/02*(2006.01)i
FI:    B32B27/36; A01G9/14 S; A01G13/02 B

According to International Patent Classification (IPC) or to both national classification and IPC

**B.    FIELDS SEARCHED**

Minimum documentation searched (classification system followed by classification symbols)

B32B, A01G

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2017-153377 A (TEIJIN FILM SOLUTIONS LTD.) 07 September 2017 (2017-09-07)<br>claims, paragraphs [0053]-[0057], [0061], examples | 1-10 |
| Y | JP 2018-57276 A (FUJIFILM CORP.) 12 April 2018 (2018-04-12)<br>paragraph [0076] | 1-10 |
| A | JP 2016-215643 A (TORAY IND., INC.) 22 December 2016 (2016-12-22)<br>entire text | 1-10 |

☐ Further documents are listed in the continuation of Box C.         ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **11 October 2022** | **25 October 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/032348**

| Patent document cited in search report | | | Publication date (day/month/year) | Patent family member(s) | Publication date (day/month/year) |
|---|---|---|---|---|---|
| JP | 2017-153377 | A | 07 September 2017 | US 2021/0195851 A1 claims, paragraphs [0108]-[0112], [0163], examples WO 2017/150165 A1 EP 3424298 A1 TW 201740796 A CN 108697053 A KR 10-2018-0120155 A | |
| JP | 2018-57276 | A | 12 April 2018 | (Family: none) | |
| JP | 2016-215643 | A | 22 December 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4200797 B
- JP 5384980 B

- JP 6780636 B

**Non-patent literature cited in the description**

- **RADFORD et al.** Reflectivity of Iridescent Coextruded Multilayered Plastic Films. *POLYMER ENGINEERING AND SCIENCE,* May 1973, vol. 13 (3